# EUROPEAN PATENT SPECIFICATION

(11) **EP 0 749 272 B1**
(45) Date of publication and mention of the grant of the patent: **07.10.1998**
(21) Application number: 95910017.3
(22) Date of filing: 09.03.1995
(51) Int. Cl.: A01K 93/00

(54) **A FISHING-FLOAT**
SCHWIMMER FÜR DIE FISCHEREI
FLOTTEUR POUR LA PECHE

(30) Priority: 09.03.1994 NL 9400364
(43) Date of publication of application: 27.12.1996
(73) Proprietor: SMART FLOAT V.O.F., 5581 HA Waalre (NL)
(72) Inventor: KORVORST, Johan Gabriel Hubert, 6373 CZ Landgraaf (NL)
(74) Representative: Van kan, Johan Joseph Hubert, Ir.
(86) International application number: NL9500090
(87) International publication number: WO9524123

(56) References cited:
- WO-A-85/05249
- NL-A- 8 701 203

## Description

The invention relates to a fishing-float provided with an elongated body having buoyancy, which comprises a first part and a second part with a water supply opening, whereby said parts are movable with respect to each other, said fishing-float furthermore being provided with a metal ball, which is movable within a holder which tapers off in the direction of said second part, whereby said ball is movable from a position in which a fishing line can pass freely through said holder and a position in which said fishing line can be clamped down by means of the ball positioned inside the conical part of the holder.

A float of this type is known from Dutch Patent Application 8701203. With this known float the first part is provided with the holder and the second part is provided with a bar which is movable within the holder, by means of which bar the ball can be moved from a position in which the ball is positioned inside the conical part of the holder, in which position the fishing line is clamped down, and a position in which the ball is positioned in a part of the holder where the fishing line can pass freely through the holder. Since the bar is connected to the second part, the position of the ball within the holder depends directly on the position of the second part relative to the first part. When the fishing-float is lowered into the water the second part of the fishing-float fills with water, whilst at the same time the first part moves away from the second part because of the air present within the fishing-float. At the moment when the second part comprising the bar has moved so far away from the first part that the ball is positioned inside the conical part of the holder, the fishing line is clamped down between the ball and the conical part of the holder.

A drawback of the known fishing-float is that the moment of clamping down of the fishing line depends on the relative positions of the first and the second part.

The object of the invention is to provide a fishing-float whereby the fishing line can be clamped down independently of the relative position of the first part and the second part of the elongated body.

This object is achieved with the fishing-float according to the invention, in that said fishing-float is provided with a metal plate, to which the ball is attachable under magnetic force, whereby the fishing line can pass freely through the holder, whilst the ball is detachable from the metal plate against said magnetic force and movable within the conical part of said holder, whereby said fishing line can be clamped down.

When the fishing-float is lowered into the water the ball is attached to the metal plate under magnetic force. At the moment when the fishing line must be clamped down, a tug is given at the fishing line, as a result of which the float experiences a shock and the ball falls from the metal plate into the conical part of the holder, thus clamping down the fishing line. In this way the clamping down of the fishing line is independent of the relative movement of the first and the second part of the elongated body of the fishing-float.

The invention will be explained in more detail hereafter with reference to the drawing, in which:
Figure 1 shows a fishing-float according to the invention in telescoped position, in which the fishing line can pass freely;
Figure 2 shows the float illustrated in Figure 1 in extended position, in which the fishing line can pass freely;
Figure 3 shows the float illustrated in Figure 1 in extended position, in which the fishing line is clamped down.

Like parts are numbered alike in the Figures.

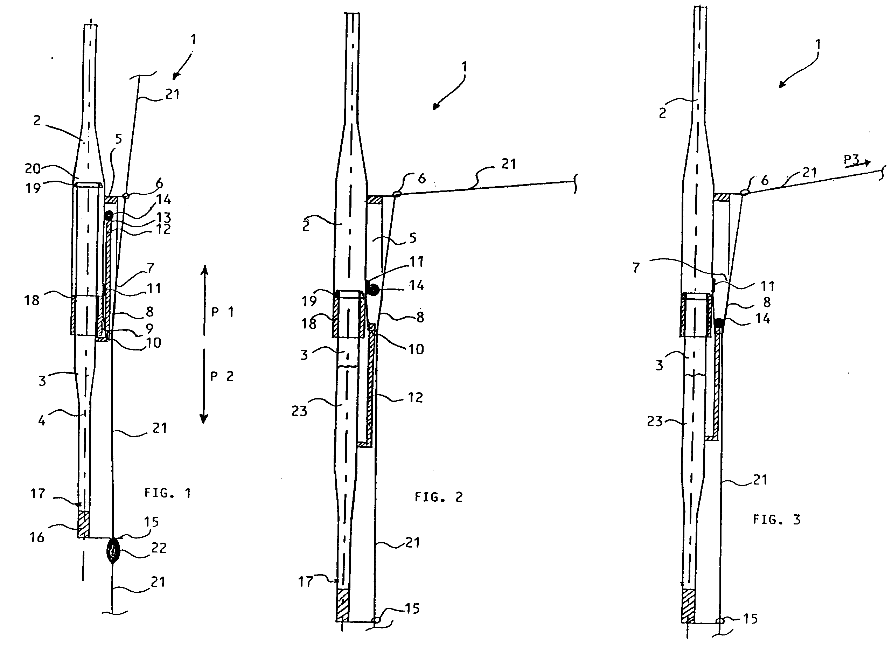

Figures 1 - 3 show a fishing-float 1 according to the invention, which is provided with a first part 2 and a second part 3, which is movably journal led within said first part. The parts 2, 3 are movable with respect to each other along an axis 4, in directions indicated by the arrows P1 and P2. The first part 2 is provided with a cylindrical holder 5, which is attached to the outside of a tubular portion of the first part 2. The holder 5 is provided with a ring 6, an inlet opening 7, a part 8 tapering off towards the second part, an outlet opening 9 and a passage 10. The holder 5 is furthermore at the inside provided with a magnetic plate 11. The second part 3 is provided with a bar 12, which is attached to the outside of a tubular portion of the second part 3 with one end and which extends substantially parallel to the axis 4. The other end 13 of the bar 12 is inserted into the holder 5 through the passage 10. A metal ball 14 is positioned within the holder 5, said ball being supported by the end 13 of the bar 12 in the situation shown in Figure 1. The second part 3 is furthermore provided with a ring 15, a lead sleeve 16 and an opening 17 provided in a tubular portion of the second part. Said lead sleeve 16 is provided on an end of the second part remote from the first part and functions to keep the fishing-float 1 in a vertical position in the water. The tubular portion of the first part 2 is provided with a cylinder 18, which forms a stop for a flange 19 provided on one end of the second part located within the first part, which limits the movement of the second part 3 with respect to the first part 2 in the direction of the arrow P2 (see Figures 2 and 3). The tubular portions of the first and the second part 2, 3 are hollow, and the tubular portion of the second part is in open communication with the tubular portion of the first part 2 through an open end 20 of the second part 3 located within the first part 2.

The operation of the float is as follows.

The fishing line 21 is passed through the ring 6, then moved into the holder 5 through the inlet opening 7 and out of the holder 5 through the outlet opening 9, and finally it is passed through the ring 15. Then a lead ball 22 and a fish-hook (not shown) are attached to a part of the fishing line 21 located below the ring 15. The fishing line 21 is attached to a fishing rod (not shown) at a side located above the ring 6.

When the fishing-float 1 and the fish-hook are cast into the water the second part 3 is positioned within the first part 2, in which position the ball 14 is supported by the bar and the fishing line 21 can pass freely through the rings 6, 15 and through the openings 7, 9 (see Figure 1).

In the water the lead ball will cause the fishing line 21 to sink to the bottom of the water. Water 23 flows into the second part 3 through the opening 17. Since no air can escape from the fishing-float 1, the first and the second part 2, 3 are moved in a direction away from each other in order to maintain the atmospheric pressure within the fishing-float 1. The parts 2, 3 are moved away from each other until the flange 19 of the second part 3 abuts against the cylinder 18 of the first part 2. During the movement of the second part 3 with respect to the first part 2 the bar 12 is largely moved out of the holder 5 and the ball 14 is moved in the direction of the arrow P2 with respect to the first part 2, until the ball 14 is positioned opposite the magnetic plate 11 and is held by the magnetic plate 11 as a result of the magnetic force. The fishing line 21 can still pass freely along the fishing-float 1 (see Figure 2). The lead ball 22 will cause the fishing line 21 to sink to the bottom of the water. As a result of the movement of the fishing line with respect to the float 1 the fishing-float 1 is slightly pulled into the water. At the moment when the lead ball 22 touches the bottom, the fishing line 21 is no longer moved along the fishing-float 1 and the fishing-float will slightly rise from the water. For the fisherman this indicates that the lead ball 22 has reached the bottom. Then the fisherman will tug at the fishing line 21 with the fishing rod in the direction of the arrow P3, as a result of which the fishing-float 1 will experience a shock. The shock will make the ball 14 fall from the magnetic plate 11 into the conical part 8 of the holder 5 (see Figure 3), as a result of which the fishing line 21 is clamped down between the ball 14 and the wall of the conical part 8. As a result of the shock the fishing-float 1 is moved upwards over a small distance and the lead ball 22 will be slightly lifted from the bottom when the fishing line 21 is clamped down. This can be seen because the fishing-float 1 will then take up a balanced position and slightly sink into the water. A next tug at the fishing line 21 with the fishing rod in the direction of the arrow P3 will pull the fishing line 21 in that direction, whereby the ball 14 is moved in the direction of the arrow P1. After the tug the ball 14 will fall into the conical part 8 again and clamp down the fishing line 21 again. In this way the fisherman can decide himself at what distance from the bottom he will fish.

It is also possible to clamp down the fishing line 21 before the lead ball 22 has reached the bottom. From the moment when the fishing-float 1 has taken up the position shown in Figure 2, the ball 14 is tapped from the magnetic plate 11 by tugging at the fishing line 21 in the direction of the arrow P3, and the fishing line 21 is clamped down between the ball 14 and the wall of the conical part 8 of the holder 5.

The first and the second part 2, 3 are preferably made of plastic material.

Instead of or besides the plate 11 also the ball 14 may be magnetic.

## Claims

1. A fishing-float (1) provided with an elongated body having buoyancy, which comprises a first part (2) and a second part (3) with a water supply opening (17), whereby said parts are movable with respect to each other, said fishing-float furthermore being provided with a metal ball (14), which is movable within a holder (5) which tapers off in the direction of said second part (3), whereby said ball is movable from a position in which a fishing line can pass freely through said holder and a position in which said fishing line can be clamped dawn by means of the ball (14) positioned inside the conical part (8) of the holder (5), characterized in that said fishing-float (1) is provided with a metal plate (11), to which the ball is attachable under magnetic force, whereby the fishing line can pass freely through the holder (5), whilst the ball (14) is detachable from the metal plate (11) against said magnetic force and movable within the conical part (8) of said holder (5), whereby said fishing line can be clamped down.

2. A fishing-float (1) according to claim 1, whereby said first part (2) is provided with the holder (5) and said second part (3) is provided with a bar (12) which is movable within said holder (5), characterized in that the ball (14) is movable by means of said bar (12) from a position in which said ball is positioned within the conical part (8) of the holder (5) to a position in which the ball is detachably attached to the metal plate (11) under magnetic force.

## Patentansprüche

1. Schwimmer (1) für die Fischerei, der mit einem länglichen Körper mit Schwimmfähigkeit ausgestattet ist, welcher ein erstes Teil (2) und ein zweites Teil (3) mit einer Wassereintrittsöffnung (17) aufweist, wobei die Teile relativ zueinander beweglich sind und der Schwimmer des weiteren mit einer Metallkugel (14) ausgestattet ist, welche innerhalb einer Halterung (5) beweglich ist, die sich in Richtung des zweiten Teils (3) zuspitzt, wobei die Kugel beweglich ist zwischen einer Position, in welcher eine Angelschnur die Halterung frei passieren kann und einer Position, in welcher die Angelschnur mittels der Kugel, welche innerhalb des konischen Teils (8) der Halterung (5) angeordnet ist, (14) festgeklemmt werden kann, **dadurch gekennzeichnet,** daß der Schwimmer (1) mit einer Metallplatte (11) ausgestattet ist, an welcher der Ball mittels Magnetkraft zu befestigen ist, wobei die Angelschnur die Halterung (5) frei passieren kann, während die Kugel (14) von der Metallplatte (11) gegen die Magnetkraft zu lösen und innerhalb des konischen Teiles (8) der Halterung (5) beweglich ist, wobei die Angelschnur festgeklemmt werden kann.

2. Schwimmer (1) nach Anspruch 1, wobei das erste Teil (2) mit der Halterung (5) ausgestattet ist und das zweite Teil (3) mit einer Stange (12) ausgestattet ist, die innerhalb der Halterung (5) beweglich ist, **dadurch gekennzeichnet,** daß die Kugel (14) mittels der Stange (12) von einer Position, in welcher der Ball innerhalb des konischen Teils (8) der Halterung (5) angeordnet ist in eine Position, in welcher der Ball lösbar an der Metallplatte (11) mittels Magnetkraft befestigt ist, beweglich ist.

## Revendications

1. Flotteur de pêche (1), pourvu d'un corps allongé ayant une certaine flottabilité, qui comprend une première partie (2) et une seconde partie (3) dotée d'une ouverture d'alimentation en eau (17), ce par quoi lesdites parties sont mobiles l'une par rapport à l'autre, ledit flotteur de pêche étant pourvu en outre d'une bille métallique (14), qui est mobile à l'intérieur d'une cage (5) qui est effilée dans une direction de ladite seconde partie (3), ce par quoi ladite bille est mobile depuis une position dans laquelle ladite ligne de pêche peut traverser librement ladite cage, et une position dans laquelle ladite ligne de pêche peut être bloquée au moyen de la bille (14) qui est positionnée à l'intérieur de la partie conique (8) de la cage (5), caractérisé en ce que ledit flotteur de pêche (1) est pourvu d'une plaque métallique (11), à laquelle la bille peut être fixée sous l'action d'une force magnétique, ce par quoi la ligne de pêche peut traverser librement la cage (5), alors que la bille (14) peut être détachée de la plaque métallique (11) contre ladite force magnétique et être mobile à l'intérieur de la partie conique (8) de ladite cage (5), ce par quoi ladite ligne de pêche peut être bloquée.

2. Flotteur de pêche (1) selon la revendication 1, dans lequel ladite première partie (2) est pourvue de la cage (5) et ladite seconde partie (3) est pourvue d'une barre (12) qui est mobile à l'intérieur de ladite cage (5), caractérisé en ce que la bille (14) est mobile par l'intermédiaire de ladite barre (12) depuis une position dans laquelle ladite bille est positionnée à l'intérieur de la partie conique (8) de la cage (5) jusqu'à une position dans laquelle la bille est fixée de façon amovible à la plaque métallique (11) sous l'action d'une force magnétique.
